# EUROPEAN PATENT SPECIFICATION

(11) **EP 1 237 252 B1**
(45) Date of publication and mention of the grant of the patent: **12.01.2005**
(21) Application number: 02251261.0
(22) Date of filing: 25.02.2002
(51) Int. Cl.: H02K 1/17, H02K 1/27, H02K 23/04

(54) **Magnet assembly for a motor and method of making same**
Magnetanordnung für einen Motor und Verfahren zu ihrer Herstellung
Arrangement d'aimants pour un moteur et procédé de fabrication

(30) Priority: 23.02.2001 US 271141 P; 22.02.2002 WO PCT/US02/05029
(43) Date of publication of application: 04.09.2002
(73) Proprietor: Black & Decker Inc., Newark Delaware 19711 (US)
(72) Inventor: Agnes, Michael, MD 21014 (US); Ortt, Earl, MD 21014 (US); Wang, Ren H., MD 21093 (US); Boyce, Allyn, MD 21013 (US); Verbrugge, Brandon, MD 21286 (US); Zhang, Jiaqi, MD 21030 (US); Du, Hung T., MD 21136 (US); Walter, Richard T., MD 21013 (US)
(74) Representative: Bell, Ian Stephen

(56) References cited:
- FR-A- 2 617 344
- US-A- 3 887 826
- US-A- 4 625 392
- US-A- 4 877 986
- US-A- 4 954 736
- US-A- 4 973 872

## Description

The present invention relates to field assemblies for electric machines.

In construction of field assemblies for electric machines, magnets must be retained on a cylinder of the field assembly. For example, in a brush type of motor, magnets must typically be retained on a stator housing or a separate flux ring within the stator housing. Ordinarily, these magnets have been glued or adhered to the metallic flux ring or stator housing. This typically involves gluing or adhering each individual magnet to the flux ring or stator housing.

In adhering the magnets to the metallic surface so that the magnets do not shift during use, various types of adhesives have been used. While some of the adhesives have been satisfactory, some adhesives work better than others. As the adhesives age, it is possible that if the device using the electric machine, such as a power tool having a motor, is dropped, that the sudden shock will destroy the bond between the magnet and the housing or flux ring, enabling the magnet to travel within the motor. The magnet itself could also break. When this occurs, the motor ceases to function.

More recently, due to the advent of molded magnets, it is possible to provide an anchor in the flux ring or stator housing and injection mold the magnetic material on the flux ring or stator housing and around the anchor, which then retains the molded magnet material on the flux ring or stator housing. Such an anchor system is disclosed in United States Application Serial No. 09/492,059 filed January 27, 2000 entitled Anchoring System for Injection Molded Magnets on a Flux Ring or Motor Housing and in United States Application Serial No. 09/764,004 filed January 17, 2001 entitled Anchoring System for Injection Molded Magnets on a Flux Ring or Motor Housing.

However, a disadvantage of the anchoring systems described in the above two referenced patent applications is that they require the use of injection molded magnetic material, which is typically the most expensive type of magnetic material per unit flux.

There are 3 different types of hard magnet materials that are commonly used in small DC motors for portable battery operated power tools: ferrite, bonded Neodymium Iron Boron, and sintered Neodymium Iron Boron. (Neodymium Iron Boron will be referred to herein as "Neo".) The latter two materials are considered high magnetic energy density hard magnetic materials. ("Hard magnetic material" is material that can be permanently magnetized. "Soft magnetic material," on the other hand, is material that carries magnetic flux but that cannot be permanently magnetized.) The bonded Neo magnet material can be injection molded or compression bonded. Compression bonded magnets, such as the magnets available from Magnequench, Inc., 6435 Scatterfield Road, Anderson, IN 46013-9606 under the MQ product designations, come in multiple varieties of increasing total magnetic flux: MQ1, MQ2, and MQ3, which is mainly a result of the amount of processing they receive and at what temperature and pressure they are pressed.

The cost effectiveness of magnets can be measured in magnetic flux (in Gauss) per unit cost (in $). In general, the flux per dollar of the previously mentioned magnet materials is as follows from most expensive to least expensive: injection molded bonded Neo, MQ1 Neo, MQ2 Neo, MQ3 Neo, sintered Neo, and ferrite. The flux per dollar of MQ3 Neo and sintered Neo is very close to that of ferrite.

A further anchoring system is described in FR2617344, in which magnets are bonded to the walls of a cylinder by molding plastic around them and through anchor holes in the cylinder.

According to an aspect of the present invention there is provided a cylinder and magnet assembly for a field assembly of an electric machine, comprising:
(a) placing magnets around a surface of a cylinder having anchors projecting from said surface and formed as flux spreaders; and
(b) molding plastic around the magnets and the anchors to secure the magnets to the cylinder wherein that holes are formed at least one junction between the anchors and the surface of the cylinder to provide a magnetic choke.

According to another aspect of the present invention, there is provided a cylinder and magnet assembly for a field assembly of an electric machine, comprising:
(a) a cylinder having a surface with anchors projecting from the surface and formed as flux spreaders; and
(b) a plurality of magnets secured to the surface of the cylinder by a molding of plastic molded around the magnets and the anchors, characterised in that holes are formed at least one junction between the anchors and the surface of the cylinder to provide a magnetic choke.

Further areas of applicability of the present invention will become apparent from the detailed description provided hereinafter. It should be understood that the detailed description and specific examples, while indicating the preferred embodiment of the invention, are intended for purposes of illustration only and are not intended to limited the scope of the invention.

The present invention will become more fully understood from the detailed description and the accompanying drawings, wherein:
Figure 1 illustrates a cross-section view of a power tool in accordance with the present invention;
Figure 2 illustrates a perspective view of a cylinder/magnet assembly for a stator for a direct current motor;
Figure 3 is a cross-section view of the cylinder/magnet assembly of Figure 2 taken along the line 3 - 3 of Figure 2;
Figure 4 is an arcuate section view of the cross-section view of Figure 3 taken along the line 4-4 of Figure 3;
Figure 5 is an arcuate section view of a variation of the cylinder/magnet assembly of Figure 2;
Figure 6 is a perspective view of a flux ring of a flux ring and magnet assembly for a stator of a direct current motor;
Figure 7 is a perspective view of a flux ring and magnet assembly for a stator of a direct current motor using the flux ring of Figure 6;
Figure 8 is a cross-section of the flux ring and magnet assembly taken along the line 16-16 of Figure 7;
Figure 9 is a perspective view of a magnet used in the flux ring and magnet assembly of Figure 7;
Figure 10 is an enlarged section view of the flux ring taken along the line 18-18 of Figure 6 through an anchor of the flux ring;
Figure 11 is a cross-section view of a cylinder and magnet assembly for a stator for a direct current motor;
Figure 12 is an end view of a magnet of the cylinder and magnet assembly of Figure 11;
Figure 13 is a perspective view of the magnet of Figure 12;
Figure 14 is a partially broken cross-section view of a section of a modification of the cylinder and magnet assembly of Figure 11;
Figure 15 is cross-section view of a cylinder and magnet assembly for a stator for a direct current motor;
Figure 16 is a cross-section view of a cylinder and magnet assembly for a stator for a direct current motor showing gate locations for plastic molding;
Figure 17 is a cross-section view of a section of a flux ring and magnet assembly for a direct current motor;
Figure 18 is a perspective view of a section of the flux ring of Figure 17 with an anchor/flux spreader;
Figure 19 is a side view of a stamped blank that is rolled to form a flux ring;
Figure 20 is an end view of a section of a flux ring rolled from the stamped metal blank of Figure 19 with an anchor having one lengthwise split;
Figure 21 is a side view taken along the line 29-29 of Figure 18;
Figure 22 is a top view of the flux ring of Figure 18 with holes formed at bases of base sections of the anchor according to the invention;
Figure 23 is an end view of a section of the flux ring of Figure 22;
Figure 24 is a top view of the flux ring of Figure 20 with holes formed at bases of base sections of the anchor according to the invention;
Figure 25 is an end view of a section of the flux ring of Figure 24;
Figure 26 is a cross-section view of a section of a cylinder with magnet pockets and magnets for a stator of a direct current motor;
Figure 26A is a perspective view of the cylinder with magnet pockets of Figure 26;
Figure 27 is a cross-section view of a cylinder and magnet assembly for a stator of a direct current motor with the north and south poles of the assembly having unequal distribution angles;
Figure 28 is a cross-section view of a cylinder and magnet assembly for a stator of a direct current motor with the north and south poles of the assembly having unequal numbers of magnets; and
Figure 29 is an arcuate cross-section of a field for a rotor of a brushless motor or alternator.

The following description of the preferred embodiment(s) is merely exemplary in nature and is in no way intended to limit the invention, its application, or uses.

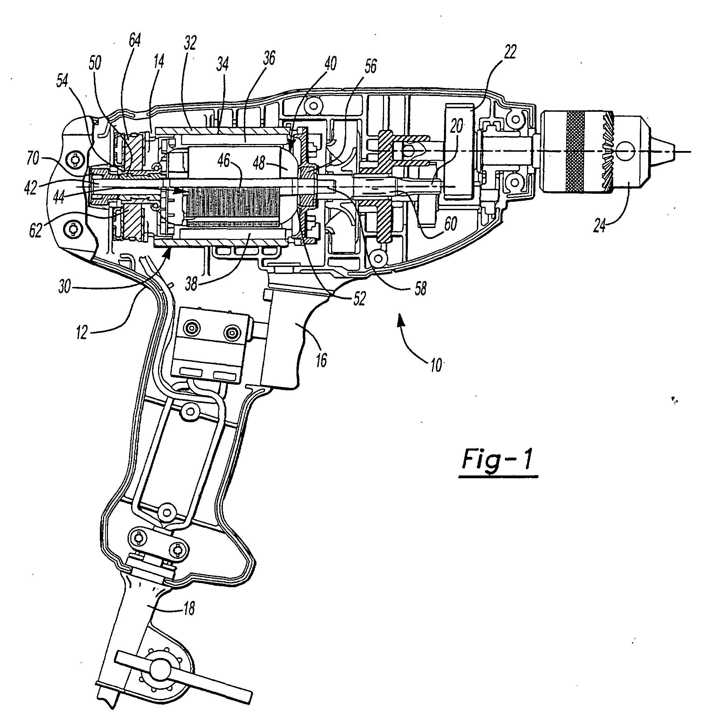

Turning to Figure 1, a power tool in accordance with the present invention is illustrated and designated with the reference numeral 10. The power tool 10 is illustrated as a drill; however, any type of power tool may be used with the motor of the present invention. The power tool 10 includes a housing 12 which surrounds a motor 14. An activation member 16 is coupled with the motor 14 as well as with a power source 18. The power source 18 may be a power cord (AC current) or the power tool may have a battery (DC current) (not shown). The motor 14 is coupled with an output 20 which may include a transmission 22 and a chuck 24 to retain a tool (not shown) with the drill.

The motor 14 includes a stator assembly 30 which includes a housing 32, flux ring 34, and magnets 36 and 38. An armature 40 includes a shaft 42, a rotor 44 with laminations 46 and windings 48, as well as a commutator 50 coupled with the shaft 42. The motor also includes end plates 52 and 54. End plate 52 includes a bearing 56 which supports one end of the shaft 58 which is coupled with a pinion 60 which is part of the power tool output. Brushes 62 and 64 are associated with the commutator 50. A bearing 70 is also coupled with the end cap to balance rotation of the shaft 42.

An electric machine is an electric motor, alternator or generator. A field assembly for an electric machine is the part of the electric machine that provides magnetic flux. In a brush type electric machine, the field is usually the stator. In a brushless electric machine, the field is usually the rotor.

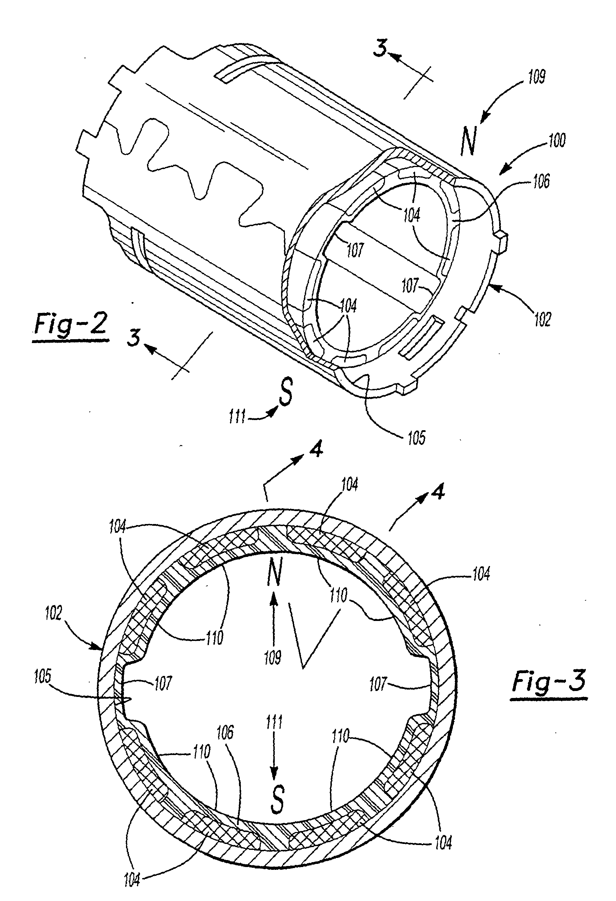

Turning to Figures 2 - 4, a cylinder/magnet assembly for a field assembly of an electric machine, illustratively a stator assembly 100, is described. Stator assembly 100 would be used in motor 14 in lieu of stator assembly 30 of Figure 1. Stator assembly 100 includes a cylinder, such as stator housing 102, made of soft magnetic material such as cold rolled steel. Stator housing 102 has anchors 108 formed therein, which illustratively extend inwardly. Magnets 104 are disposed around an inner surface 105 of stator housing 102 and a plastic molding 106, illustratively a ring, secures magnets 104 to stator housing 102. Stator assembly 100 is formed by placing stator housing 102 with magnets 104 disposed around its inner surface 105 in a die in an injection molding machine (not shown) and injection molding plastic therein to form plastic molding 106 around magnets 104 and anchors 108. In this regard, plastic may or may not be molded into recessed areas 107 between north pole 109 and south pole 111. Magnets 104 are sandwiched between portions 110 of plastic molding 106 and inner surface 105 of stator housing 102. In this regard, the portions 110 of plastic molding 106 must be sufficiently thick to withstand the stresses imposed on them when the DC motor, such as motor 14, is operating and such that might occur when power tool 10 is dropped. The plastic used to injection mold plastic molding 106 is preferably a high temperature plastic, such as high temperature nylon or PPS. This plastic can illustratively be nylon 66, which is not ferromagnetic.

Anchors 108 also serve to locate magnets 104 in place in stator housing 102 for subsequent molding. Magnets 104 are illustratively not magnetized when placed on inner surface 105 of stator housing 102, or lightly magnetized so that they hold themselves in place on inner surface 105 of stator housing 102. Magnets 104 are then fully magnetized in an operation subsequent to the completion of the molding process. However, it should be understood that magnets 104 can be magnetized prior to placement on inner surface 105 of stator housing 105.

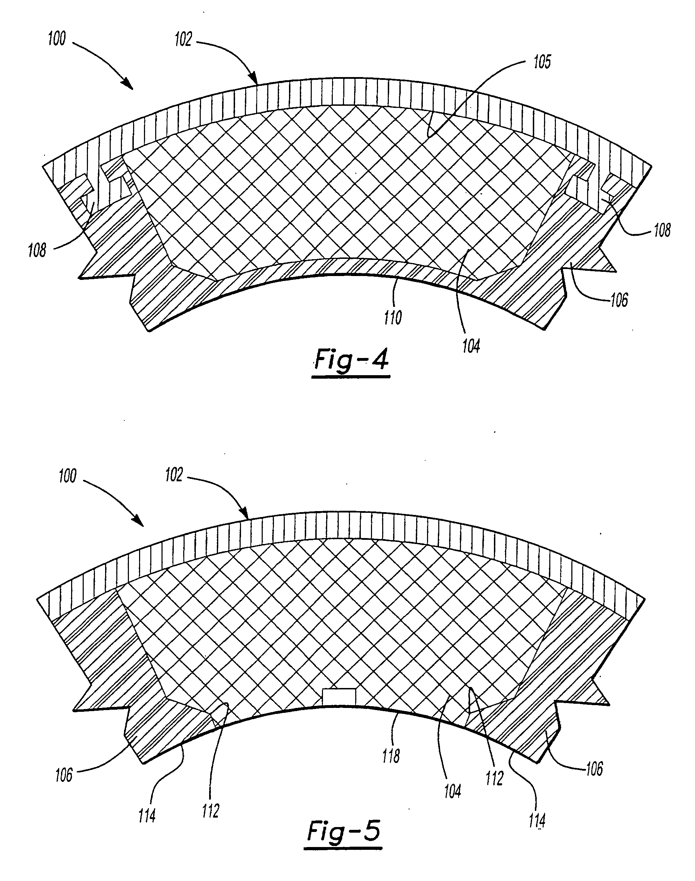

With reference to Figure 5, a variation of the assembly shown is Figures 2 - 4 is shown. Like elements are identified with like reference numerals. Magnets 104 have stepped edges 112. When the plastic is injection molded around magnets 104 and stepped edges 112 of magnets 104 to form plastic molding 106, the plastic forms finger like structures 114 on each side of the magnets 104 that cooperates with stepped edges 112 of magnets 104 to retain magnets 104 in place against the inner surface 105 of stator housing 102. In this regard, there is no need to sandwich the magnets 104 between plastic molding 106 and the inner surface 105 of stator housing 102, and thus no need for any plastic 116 to be disposed on inner surfaces 118 of magnets 104. This results in a smaller air gap being needed between inner surfaces 118 of magnets 104 and rotor 44 (Figure 1) than is the case in the aspect of the invention shown in Figures 2 - 4. In this regard, the aspect of the invention shown in Figures 2 - 4 requires that the magnets 104 used therein have greater magnetic flux than the magnets 104 used in the aspect shown in Figure 5 due to the larger air gap needed for the aspect shown in Figures 2 - 4 compared to the aspect shown in Figure 5.

The magnets (magnets 104) are pre-formed magnets, preferably of high energy density hard magnetic material such as MQ2, MQ3 or sintered Neo. An advantage is that these magnets do not require further processing after they are formed to optimize their tolerances. Generally, MQ3 or sintered Neo magnets must be machined to final size after they are formed since the sintering process used to form them does not result in precise shapes. When adhering magnets to the inner surface of a flux ring or stator housing using adhesive, the outer surface of the magnets needs to precisely conform to the inner surface of the flux ring or stator housing to obtain the optimum adhesive bond. The shown assemblies obviate the need to have precisely shaped magnets in that the magnets are held in place by plastic molding. In the aspects of the invention where the plastic is injection molded around the magnets, any variations in the shape of the magnets is accommodated by the plastic injection molding process by the plastic flowing around the magnets.

The shown assemblies provide for more efficient distribution of magnetic flux in that they allow for the use of more, smaller magnets and wide flexibility of the placement of the magnets in the stator housing or flux ring. In the construction shown in Figures 2 - 4, eight magnets 104 are illustratively used and are illustratively high magnetic energy density magnets, such as MQ2, MQ3, or sintered NEO magnets. In this regard, the eight magnets 104 are smaller than the two or four magnets that would typically have been used in stator assemblies. By using more, smaller magnets when high magnetic energy density magnets are used, the magnetic flux can be distributed more efficiently. Further, equivalent flux can be achieved at a lower cost using two spaced apart magnets per pole than one magnet that extends the length of the pole. In this regard, it should be understood that other than eight magnets can be used, such as two magnets per pole.

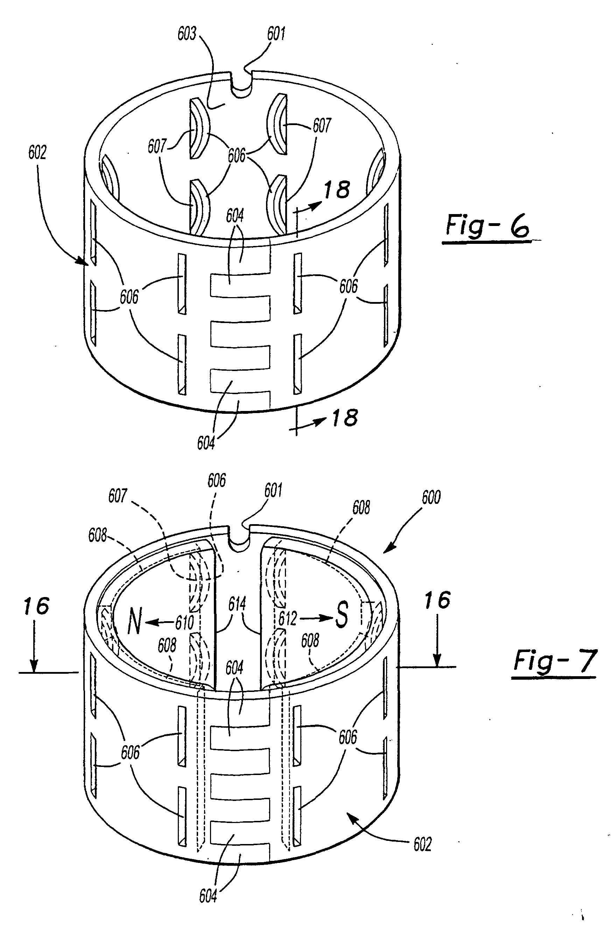

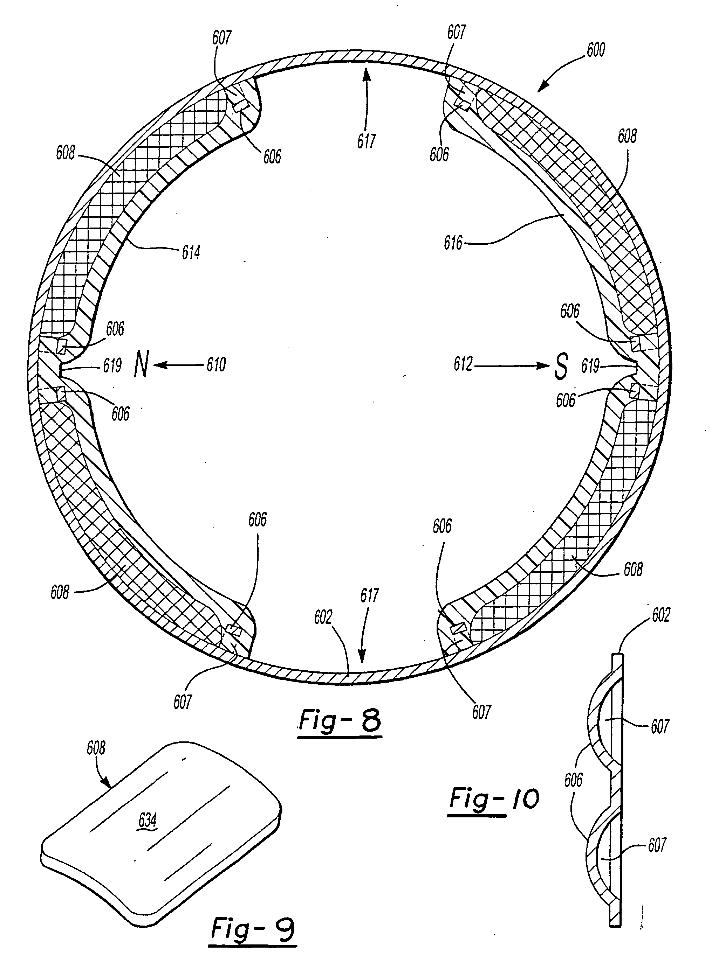

Turning to Figures 6 - 10, a cylinder/magnet assembly, illustratively a flux ring/magnet assembly 600 has an expandable flux ring 602. Flux ring 602 is made of soft magnetic material, such as cold rolled steel, CRS1006 or CRS1008 for example. Flux ring 602 is illustratively formed by stamping a rectangular sheet metal blank and rolling the stamped sheet metal blank. The rectangular sheet metal blank is stamped to form fingers 604 at both ends and a plurality of pairs of spaced apart, inwardly projecting anchors 606 transversely extending across flux ring 602. Anchors 606 are illustratively arcuate wire shaped segments, as shown in more detail in Figure 10, with spaces 607 thereunderneath through which plastic can flow during molding.

Flux ring/magnet assembly 600 further includes a magnet 608 disposed between each pair of spaced apart anchors 606 (see Figure 7). Illustratively, flux ring/magnet assembly 600 has four magnets 608, with two adjacent magnets 608 for a north pole 610 and the other two adjacent magnets 608 for a south pole 612. Magnets 608 are illustratively made of 34KC2 sintered Neo magnetic material available from Magnequench.

Flux ring/magnet assembly 600 is made in accordance with the above discussed process. A magnet 608 is inserted between each pair of opposed anchors 606 of expandable flux ring 602 which locate magnets 608 in place in expandable flux ring 602 for the subsequent molding. As discussed above, magnets 608 are illustratively not magnetized, or lightly magnetized so that they hold themselves in place on an inner surface 603 of flux ring 602.

Each magnet 608 is illustratively rectangular in shape, curved along its width, so that an outer surface 634 of each magnet 608 conforms to inner surface 603 of flux ring 602. Magnets 608 are thus illustratively shaped as arcuate sections of a cylinder.

Flux ring 602 with magnets 608 therein is then inserted into a mold in an injection molding machine and precisely located in the mold by notch 601 in an end of flux ring 602. Plastic is then injection molded around the magnets 608 and anchors 606, including through spaces 607 under anchors 606. This illustratively results in an arcuate plastic segment 614 encapsulating the adjacent magnets 608 of the north pole 610 and the anchors 606 adjacent those magnets and extending through spaces 607 beneath the anchors 606 adjacent those magnets, and an arcuate plastic segment 616 encapsulating the adjacent magnets 608 of the south pole 612 the anchors 606 adjacent those magnets and extending through spaces 607 beneath the anchors 606 adjacent those magnets so that the plastic is interlocked with the anchors when the plastic hardens. Gaps 617 between arcuate plastic segments 614, 616 provide for uniform wall thickness of the plastic and enhance air flow through flux ring/magnet assembly 600 when it is assembled in a motor. Also, fingers 604 of flux ring 602 are disposed in one of gaps 617, allowing flux ring 602 to expand and contract. Recesses 619 between adjacent magnets 608 of each pole also provide for uniform wall thickness of the plastic and enhance air flow through flux ring/magnet assembly 600. As is known, keeping the wall thickness of molded plastic uniform is desirable so that the plastic cools uniformly. Without gaps 617 and recesses 619, the thickness of the plastic over the areas of inner surface 603 of flux ring 602 on which magnets 608 are disposed would be greater than the thickness of the plastic over magnets 608.

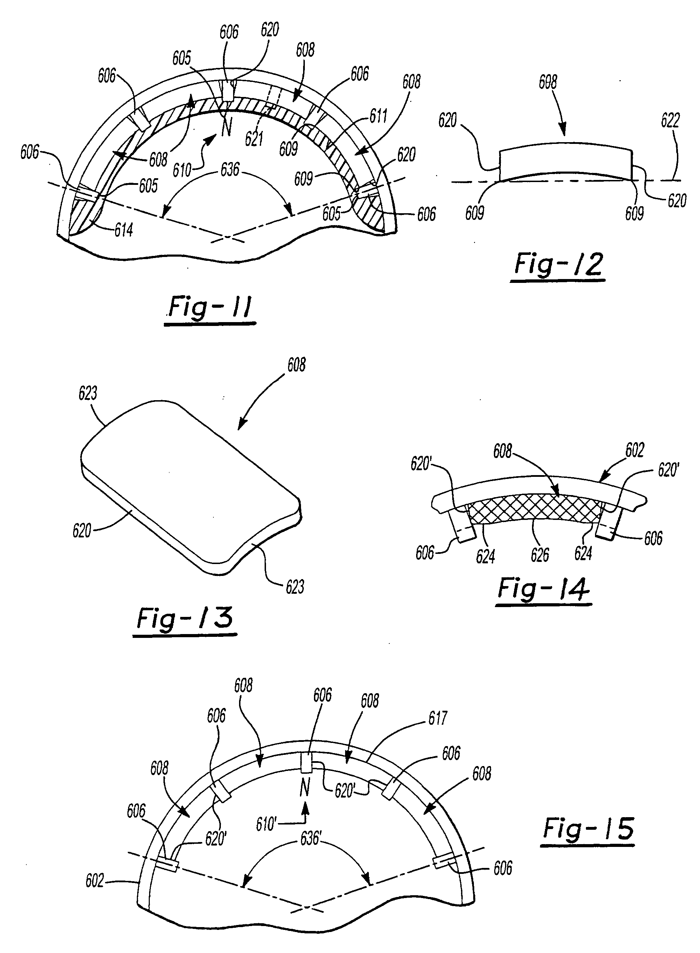

With reference to Figures 11 - 13, anchors 606 can also advantageously be used to keep magnets 608 from moving radially inwardly. Sidewalls 620 of magnets 608 are vertical with respect to a horizontal plane 622 (as oriented in Figure 12). Thus, when magnets 608 are positioned between anchors 606 in flux ring 602, sidewalls 620, while they extend inwardly, do not extend radially inwardly toward a center of flux ring 602. On the other hand, anchors 606 do extend radially inwardly toward the center of flux ring 602. Opposed side edges 609 of magnets 608 will thus intersect anchors 606 and prevent magnets from moving radially inwardly. In this regard, anchors 606 illustratively have a height that slightly exceeds the height of magnets 608. Thus, a straight line distance between inward ends 605 of each set of adjacent anchors 606 having a magnet 608 therebetween is less than a straight line distance between opposed side edges 609 of inner surface 611 of the magnet 608 between those anchors 606.

To retain magnets in the axial direction across flux ring 602, flux ring 602 can be formed with end tabs 621, only one of which is shown in Figure 11. Illustratively, flux ring 602 would have one end tab 621 for each magnet 608. When a magnet 608 is placed in flux ring 602 between anchors 606, an end 623 of magnet 608 would be butted against the end tab 621 and plastic would illustratively be gated on the end 623 of magnet 608 opposite end tab 621. This facilitates making subassemblies of magnets 608 and flux rings 602 prior to the molding process.

Turning to Figures 14 and 15, a variation of the assembly described with respect to Figures 11 - 13 is shown. As shown in Figure 14, sidewalls 620' of magnets 608 are angled to more closely match, or parallel, the radial projection of anchors 606. In this regard, flats 624 at both ends of a radial inner surface 626 of each magnet 608 would be sized to provide optimum retention of magnets 608. Since angling the sidewalls 620' of magnets 608 would slightly reduce the volume of magnets 608 compared to magnets 608 having vertical or flat sidewalls 620, the distribution or included angle 636' of north pole 610' having magnets 608 with angled sidewalls 620' (Figure 15) would be slightly larger than the distribution angle 636 (Figure 11) of north pole 610 having magnets with flat or vertical sidewalls 620.

Angled sidewalls 620' make is possible to reduce the necessary clearances between magnets 608 and anchors 606 due to reduced tolerance stackups. This is due to the fact that the width of magnets 608 can be controlled to a tighter tolerance than flats 624. By angling the sidewalls of magnets 608, the tolerance stackup is between the sidewalls of magnets 608 and spacing of anchors 606, independent of flats 624 and height of anchors 606. This provides improved positional accuracy of magnets 608 in flux ring 602.

To optimize motor performance, magnets 608 should ideally rest up against the inner surface of the flux ring, such as inner surface 603 of flux ring 602 (Figure 6).

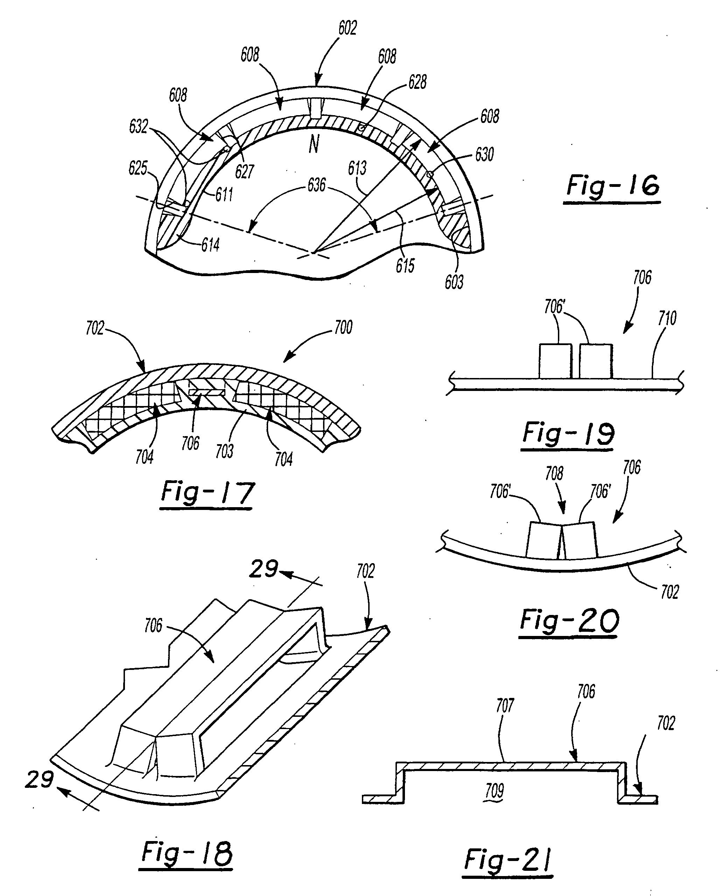

With reference to Figure 16, there are a number of gating positions where the plastic can be gated in the injection mold against magnets 608. The plastic can be gated against the center of magnets 608, shown at 628 in Figure 16. Another gate position would be between an inner radius 613 and an outer radius 615 of magnets 608, preferably, just inside inner radius 613 of magnets 608 as shown at 630 in Figure 16.

Magnets 608 can be formed with flats 624 at opposed circumferential ends 625, 627 of radially inner surface 611 and the gate position located over flats 624 and between inner and outer radii 613, 615 of magnets 608 shown at 632 in Figure 16. Flats 624 are appropriately sized so that the gate is effectively between inner and outer radii 613, 615 of magnets 608.

To optimize motor performance, magnets 608 should ideally rest up against the inner surface of the flux ring, such as inner surface 603 of flux ring 602 (Figure 16). By lightly magnetizing the magnets 608 before molding the plastic, magnets 608 hold themselves against inner surface 603 of flux ring 602 during molding the plastic, which prevents, or at least minimizes, plastic from getting between the magnets 608 and inner surface 603 of flux ring 602.

Figure 17 shows an alternative embodiment of a flux spreader. A cylinder/magnet assembly, illustratively a flux ring/magnet assembly 700, has a flux ring 702 and a plurality of magnets 704 affixed therein. It should be understood that flux ring 702 could alternatively be a stator housing. Flux ring 702 is made of soft magnetic material, such as cold rolled steel. Flux ring 702 has a plurality of inwardly extending anchors/flux spreaders. Magnets 704 are affixed to flux ring 702 by placing magnets 704 in flux ring 702 between adjacent anchors/flux spreaders 706 and molding plastic around magnets 704 and anchors/flux spreaders 706 to form plastic molding 703. Plastic molding 703 secures magnets 704 to flux ring 702. Again magnets 704 are not magnetized when placed in flux ring 702 or lightly magnetized.

Flux ring 702 is illustratively formed to include an anchor/flux spreader 706 disposed adjacent each magnet 704. Flux ring 702 is illustratively formed by stamping a sheet metal blank and rolling the stamped sheet metal to form flux ring 702. Each anchor/flux spreader 706 is illustratively formed as part of the stamping operation. With reference to Figure 18, each anchor/flux spreader 706 is an inwardly extending arcuate rectangular shaped segment that is illustratively stamped into flux ring 702 when stamped sheet metal blank 710 is stamped from the sheet metal blank. As shown in Figure 21, a top segment 707 of anchor/flux spreader 706 is spaced from flux ring 702 to provide space 709 underneath top segment 707 through which plastic can flow during the molding process.

Anchors/flux spreaders 706 perform three functions. First, they locate magnets 704 for the plastic molding operation. Second, they assist in retaining the plastic molding 703 to flux ring 702 in that the plastic flows around (including beneath) each anchor/flux spreader 706 in the injection molding operation. Third, they act to provide a more continuous magnetic field as seen by the motor armature, such as armature 40 (Figure 1). Anchors/flux spreaders 706 smooth out the discontinuities in the magnetic field that arise when multiple spaced apart magnets are used for a pole that would otherwise cause high frequency losses in the laminations of the armature. In addition, the anchors/flux spreaders 706 more evenly distribute the flux field to reduce localized saturation in the armature laminations which would otherwise reduce the total flux.

The width of each anchor/flux spreader 706 can be varied depending upon the magnetic design requirements (width and spacing). Accordingly, each anchor/flux spreader 706 can be thin or wide. Similarly, the height of each anchor/flux spreader 706 can be varied. However, the wider an anchor/flux spreader 706, the more difficult it is to manufacture it because of the difficulty in maintaining roundness when the stamped sheet metal is rolled to form flux ring 702. To overcome this, a anchor/flux spreader 706 can be discontinuous across its width as shown at 708 in Figure 19, such as being formed of multiple segments 706' as shown in Figure 19. When the flux ring 702 is formed by rolling stamped sheet metal blank 710, segments 706' are brought close together and act as a single anchor/flux spreader.

In an alternative, the plastic used to mold the plastic molding, such as plastic molding 703, can have ferromagnetic additives. The plastic molding molded out of such plastic then also functions as a flux spreader.

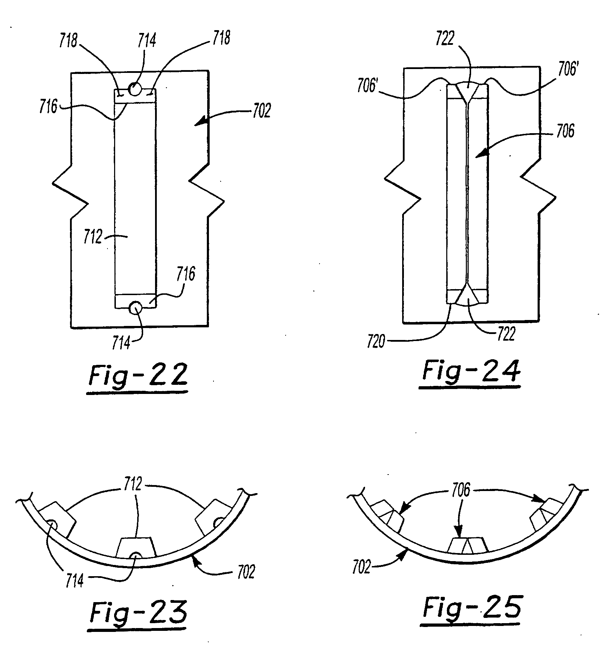

Turning to Figures 22 and 23, a variation of anchor/flux spreader 706 is shown. In the variation of Figures 22 and 23 which is in accordance with the invention, flux ring 702 has a plurality of anchors/flux spreaders 712. Anchor/flux spreaders 712 have the same shape as anchor/flux spreader 706 but with holes 714 at base ends 716 of each flux spreader 712 where each flux spreader 712 joins flux ring 702. Holes 714 facilitate the rolling of the stamped sheet metal blank to form flux ring 702. With holes 714, roundness can be maintained for a wider flux spreader 712 when the stamped sheet metal blank is rolled to form flux ring 702.

Holes 714 also enhance the magnetic characteristics of flux spreader 712. Holes 714 act as a magnetic chokes to prevent short circuiting of magnets 704 to themselves. Holes 714 cause the bases 716 of each anchor/flux spreader 712 to become areas of magnetic saturation 718. Holes 714 can be sized to minimize short circuiting of magnets 704 while increasing manufacturability of anchors/flux spreaders 712 and thus the manufacturability of flux ring 702.

Figures 24 and 25 show a modification to anchors/flux spreaders 706 of Figure 19 to provide a similar choke function. When flux spreaders 706' are formed, material is removed from bases 720 of flux spreaders 706' where flux spreaders 706' join flux ring 702 leaving choke holes 722. Choke holes 722 provide a choke function in the same way as holes 714.

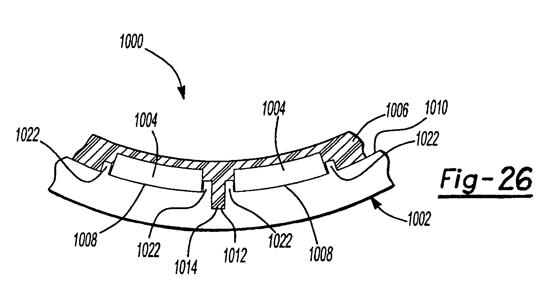

Turning to Figure 26, another assembly is shown. Cylinder/magnet assembly, illustratively a motor can (stator housing)/magnet assembly 1000, has a cylinder, such as a cylindrical stator housing or motor can 1002, magnets 1004 and a plastic molding 1006 molded around magnets 1004 that secures magnets 1004 to motor can 1002. Motor can 1002 is made of soft magnetic material, such as cold rolled steel. Motor can 1002 is formed to have magnet receiving pockets 1008 in an inner surface 1010, illustratively, one magnet receiving pocket 1008 for each magnet 1004. Magnet receiving pockets 1008 are illustratively defined by pairs of spaced apart ridges 1022 extending axially along inner surface 1010 of motor can 1002. Illustratively, spaced apart ridges 1022 extend the axial length of motor can 1002. Motor can 1002 can be manufactured using a variety of manufacturing processes, such as extrusion, drawing, or powdered metal. Spaced apart ridges 1022 are illustratively formed as part of that manufacturing process. The depths of magnet receiving pockets 1008 are small enough to minimize magnetic leakages but large enough to assure positive location of magnets 1004 in motor can 1002. Illustratively, plastic is molded so that it is flush with the ends (not shown) of motor can 1002.

Pilot features are illustratively formed in at least one endwall 1018 of the plastic molding 1006 during the molding process. A pilot feature, as that term is used herein, is one or more projections or recesses formed in the endwall of plastic molding 1006 that mates with corresponding projections or recesses formed in one or both end plates 52, 54 (Figure 1) for the motor to locate the end plate 52, 54 with respect to cylinder/magnet assembly 1000 when the end plates are affixed to the stator in which cylinder and magnet assembly 1000 is used. It should be understood that end plates 52, 54 can be a functional part of power tool 10, such as a gear case (not shown). For example, keyways 1016 (Figure 26A) are molded in endwall 1018 of plastic molding 1006. Illustratively, a keyway 1016 is molded above each magnet 1004. Illustratively, One or more of keyways 1016 may be of different size for orientation purposes. It should be understood that more or less keyways 1016 than shown in Figure 26A can be provided.

The end plate for the motor that includes the armature rotor shaft bearing, such as end plate 52 having bearing 56 (Figure 1) is formed with corresponding keys which mates with keyways 1016 when end plate 52 is affixed to the stator in which cylinder and magnet assembly is used. The pilot feature of the end plate mates with the molded pilot feature to more accurately locate end plate 52, and thus bearing 56, with respect to cylinder/magnet assembly 1000. It should be understood that end plate 52 could have the keyway and cylinder/magnet assembly have the corresponding key. Further, multiple keys and keyways can be utilized, as well as other pilot features, such as posts and holes. It should be understood that molding pilot features in the plastic molding of the cylinder and magnet assembly can also be done in the other assemblies discussed herein.

In assembling motor can/magnet assembly 1000, magnets 1004 are placed in magnet receiving pockets 1008 in motor can 1002. To create a subassembly of motor can 1002 and magnets 1004 for subsequent molding, magnets 1004 can be temporarily glued in place in motor can 1002, or lightly magnetized so that they are self-retained to motor can 1002. By lightly magnetizing magnets 1004 before plastic is molded, magnets 1004 hold themselves up against inner surface 1010 of motor can 1002, preventing or at least minimizing plastic from flowing between magnets 1004 and inner surface 1010 of motor can 10012.

Magnet receiving pockets 1008 locate magnets 1004 on motor can 1002 and keep them from moving side to side during the molding process. The subassembly of motor can 1002 and magnets 1004 is then placed in a mold, such as an injection mold, and plastic molded around magnets 1004 to secure them to motor can 1002.

Motor can 1002 may also have interlocking/keying features to retain plastic molding 1006 to motor can 1002. For example, motor can 1002 may have at least one interlock slot 1012 formed in inner surface 1010. Plastic will then flow into each interlock slot 1012 during the molding process forming in each interlock slot 1012 a corresponding interlock projection or key 1014 as part of plastic molding 1006. Interlock projection 1014 molded into interlock slot 1012 prevents plastic molding 1006 from rotating in motor can 1002. Spaced apart ridges 1022 also act to interlock plastic molding 1006 to motor can 1002.

Cylinder/magnet assembly 1000 includes through holes 1024 for bolts (not shown) that hold motor end plates 52, 54 (Figure 1) together. Through holes 1024 are partially formed in inner surface 1010 of motor can 1002, the rest of though holes 1024 being formed during the molding process. Partially forming through holes 1024 in inner surface 1010 of motor can 1002 permits a greater thickness of plastic to be disposed between through holes 1024 and an inner surface 1026 of plastic molding 1006 than if all of through holes 1024 were formed in plastic molding 1006 when plastic molding 1006 is molded.

Plastic molding 1006 can illustratively be formed with slots 1020 to provide for increased air flow through cylinder/magnet assembly 1000 after it is assembled into a motor and power tool. Slots 1020 also allow for uniform wall thickness of the plastic, in the same manner as discussed above with respect to Figure 6. Slots 1020 are illustratively formed in plastic molding 1006 between adjacent magnets 1004 of each pole and between each magnet 1004 and the through hole 1024 to which that magnet 1004 is adjacent.

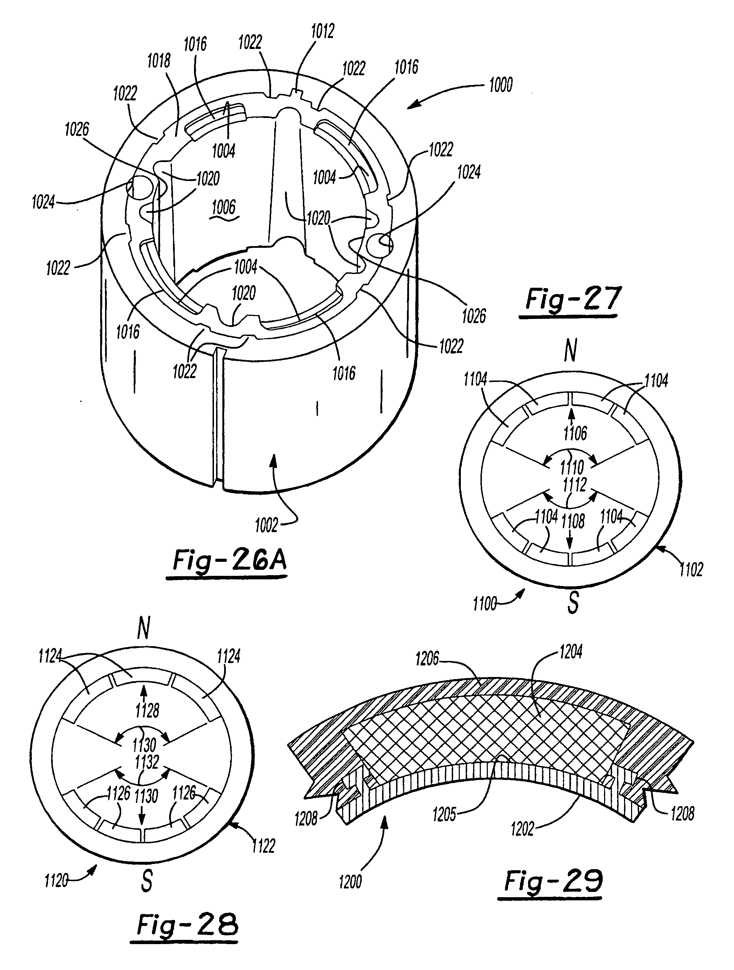

Turning to Figure 27, cylinder/magnet assembly, illustratively a flux ring/magnet assembly 1100, has a cylinder, such as a flux ring 1102, and a plurality of magnets 1104. It should be understood that flux ring 1102 could alternatively be a stator housing or motor can. Flux ring 1102 is made of soft magnetic material, such as cold rolled steel. A north pole 1106 of cylinder/magnet assembly 1100 illustratively has four magnets 1104 as does south pole 1108. It should be understood, however, that north and south poles 1106 in 1108 can have other than four magnets 1104. Magnets 1104 are illustratively, sintered Neo magnets as described above.

To reduce vibration and the resultant audible noise, the distribution or included angles 1110, 1112 of north and south poles 1106, 1108 are different. The distribution or included angle of a pole is the arcuate angle between the outer edges of the outer magnets 1104 of the pole. Each magnet 1104 has the same volume of magnet material and are illustratively the same size. The different distribution angles of the north and south poles 1106, 1108 reduce audible noise. This reduction occurs because the different distribution angles of the north and south poles 1106, 1108 result in a smaller radial force ripple.

The smaller radial force ripple results in less vibration, while the additional permanently biased radial force that also results only causes increased load on the bearing of the motor rotor shaft. (Permanently biased radial force is the bias force caused by a stronger magnetic field in one pole as opposed to the other.)

Turning to Figure 28, another assembly is shown. In Figure 28, cylinder/magnet assembly, illustratively a flux ring/magnet assembly 1120, has a cylinder, such as flux ring 1122. Flux ring 1122 is made of soft magnetic material, such as cold rolled steel. It should be understood that flux ring 1122 could alternatively be a motor can (stator housing). A north pole 1128 of flux ring/magnet assembly 1120 has a plurality of magnets 1124. The south pole 1130 of flux ring/magnet assembly 1120 has a plurality of magnets 1126. The number of magnets 1124 of north pole 1128 is different than the number of magnets 1126 of south pole 1130. Magnets 1124 and 1126 are sized differently so that the total volume of magnetic material of magnets 1124 is equal to the total volume of magnetic material of magnets 1126. The different numbers of magnets 1124 of north pole 1128 and magnets 1126 of south pole 1130 results in a different distribution of magnetic force in north pole 1128 than in south pole 1130. This reduces audible noise by reducing D force ripple. Distribution angles 1130, 1132 of north pole 1128 and south pole 1130 are illustratively equal. Distribution angles 1130, 1132 may, however, be unequal as described above.

Turning to Figure 29, a cylinder/magnet assembly 1200 for a field assembly, such as a rotor, of a brushless electric machine is shown. Cylinder/magnet assembly 1200 includes a cylinder 1202 illustratively made of soft magnetic material such as cold rolled steel. Cylinder 1202 has anchors 1208 projecting outwardly from an outer surface 1205. Magnets 1204 are disposed around outer surface 1205 of cylinder 1202 and a plastic molding 1206 secures magnets 1204 to cylinder 1202. Cylinder/magnet assembly 1200 is formed by placing cylinder 1202 with magnets disposed around its outer surface 1205 in a die in an injection molding machine (not shown) and injection molding plastic therein to form plastic molding 1206 around magnets 1204 and anchors 1208. Anchors 1208 also serve to locate magnets 1204 on cylinder 1202 for subsequent molding. Magnets 1204 are illustratively not magnetized when placed on outer surface 1205 of cylinder 1202 or lightly magnetized so that they hold themselves in place. Magnets 1204 are then fully magnetized in a subsequent operation.

The assembly shown in Figures 26 and 26A could similarly be modified for use in a rotor. In this regard, magnet receiving pockets 1008 would be formed in an outer surface of cylinder 1002 and spaced apart ridges 1022 would project outwardly for that outer surface, defining the magnet receiving pockets therebetween. For example, with reference to Figure 29, spaced apart ridges 1022 would replace anchors 1208. Magnets, such as magnets 1204, would then be secured in such magnet receiving pockets by the molding of plastic around magnets 1204.

## Claims

1. A method of making a cylinder and magnet assembly for a field assembly of an electric machine, comprising:
(a) placing magnets (704) around a surface of a cylinder (702) having anchors (706, 712); and
(b) molding plastic (703) around the magnets (704) and the anchors (706, 712) to secure the magnets (704) to the cylinder (702), **characterised in that** the anchors (706, 712) project from the surface of the cylinder (702) and are formed as flux spreaders and that holes (714, 722) are formed at least one junction (716) between the anchors (706, 712) and the surface of the cylinder (702) to provide a magnetic choke.

2. A method according to claim 1, wherein the cylinder is stamped from a blank and the cylinder is rolled from the stamped blank.

3. The method of claim 1 or 2 wherein the field assembly (700) is a rotor.

4. The method of claim 1 or 2 wherein the field assembly (700) is a stator.

5. A method according to claim 4, wherein the cylinder (702) includes an inwardly projecting stop tab (621) for each magnet (704) to locate each magnet (704) axially on the inner surface of the cylinder (702) and placing the magnets (704) around the inner surface of the cylinder includes placing them up against their respective stop tabs (621).

6. A method according to claim 4 or 5, wherein the magnets (704) are arranged on an inner surface of the cylinder (702) and wherein molding plastic (703) around the anchors (706, 712) and magnets (704) includes molding plastic around the magnets (704) so that plastic (703) is not molded on inner surfaces of the magnets (704) to reduce an air gap between the inner surfaces of the magnets (704) and a rotor of an armature of the motor.

7. A method according to any one of claims 4 to 6, wherein molding plastic (703) around the magnets (704) and the anchors (706) includes gating the plastic (703) substantially between inner and outer radii of the magnets (704).

8. The method of claim 7 wherein the magnets (704) are arranged on an inner surface of the cylinder (702) and wherein the magnets (704) include inner surfaces with flats at opposed circumferential ends and gating the plastic (703) between inner and outer radii of the magnets (704) includes gating the plastic (703) over the flats of the magnets (704) substantially between the flats and the inner radius of the magnets (704).

9. A method according to any one of claims 4 to 8 wherein molding plastic (1006) around the magnets (1004) and the anchors (1022) includes forming at least one pilot feature (1016) in at least one endwall (1018) of a plastic molding (1006) formed by molding the plastic.

10. A method according to any one of the preceding claims wherein each magnet (704) is placed between adjacent anchors (706, 712) to locate the magnets (704) on the surface of the cylinder (702).

11. A method according to any one of the preceding claims wherein stamping the blank includes stamping the blank so that each anchor (706) has at least one lengthwise split to facilitate the rolling of the blank to form the flux ring.

12. A cylinder and magnet assembly for a field assembly of an electric machine, comprising:
(a) a cylinder (702) having a surface with anchors (706, 712); and
(b) a plurality of magnets (704) secured to the surface of the cylinder (702) by a molding of plastic (703) molded around the magnets (704) and the anchors (706, 712), **characterised in that** the anchors (706, 712) project from the surface of the cylinder (702) and are formed as flux spreaders and that holes are formed at least one junction (716) between the anchors (706, 712) and the surface of the cylinder to provide a magnetic choke (702).

13. An assembly according to claim 12, wherein each magnet (704) is received between adjacent anchors (706, 712) that locate the magnet (704) on the surface of the cylinder (702).

14. An assembly according to claim 12 or 13 wherein the field assembly (700) is a stator and the anchors (706, 712) project radially inwardly from the inner surface of the cylinder (702) and have a height greater than a height of the magnets (704) so that a distance between radially inward ends of adjacent anchors (706, 712) between which a magnet (704) is received is less than a distance between opposed side edges of an inner surface of that magnet (704) to hold the magnet (704) against radial inward movement.

15. An assembly according to claim 14, wherein sidewalls of the magnets (704) extend radially inwardly parallel to the anchors (706, 712).

16. An assembly according to any one of claims 12 to 15, having at least one pair of north (N) and south (S) poles, each pole having a plurality of magnets (704), the anchors (706, 712) formed as flux spreaders.

17. An assembly according to any one of claims 12 to 16, wherein the field assembly (700) is a stator and each anchor (706, 712) includes first and second opposed portions (720) extending inwardly from the inner surface of the cylinder (702) and a third portion (707) extending between the first and second opposed portions that is spaced inwardly from the inner surface of the cylinder (702), the third portion (707) extending transversely across the cylinder (702) for substantially an entire length of the magnet (704) to which it is adjacent.

18. An assembly according to any one of claims 12 to 17 wherein the field assembly (700) is a stator and the cylinder is a flux ring.

19. An assembly according to any one of claims 12 to 17 wherein the field assembly (700) is a stator and the cylinder is a stator housing.

20. An assembly according to any one of claims 12 to 17 wherein the field assembly (700) is a rotor.

21. An assembly according to any one of claims 12 to 20 wherein at least one pilot feature (1016) is formed in at least one endwall (1018) of the plastic molding (1006) when the plastic molding (1006) is molded around the magnets (1004) and anchors (1022).

22. An assembly according to any one of claims 12 to 21 having at least one pair of north (N) and south (S) poles with each pole having a plurality of magnets (704) and the plastic molding including a plastic molding around the magnets (704) of each north (N) and south (S) pole, the plastic molding (703) molded out of plastic having ferromagnetic additives so that the plastic molding (703) around each of the north and south poles acts as a flux spreader.

23. A motor comprising:
(a) a stator comprising a field assembly according to any one of claims 12 - 22;
(b) an armature rotatable within the stator;
(c) a commutator rotatable with the armature and connected to the armature via a shaft; and
(d) brush assemblies associated with the commutator.

24. A power tool, comprising:
(a) a housing;
(b) a motor according to claim 23;
(c) a power supply;
(d) an output member coupled with the motor shaft; and
(e) an actuator member electrically coupled between the motor and the power source for energizing and de-energizing the motor, the motor rotating the output member when energized.

## Patentansprüche

1. Verfahren zur Herstellung einer Zylinder- und Magnetanordung für eine Feldanordnung einer elektrischen Maschine, umfassend
(a) Anordnen von Magneten (704) entlang einer Fläche eines Anker (706, 712) aufweisenden Zylinders (702) und
(b) Formen von Kunststoff (703) um die Magnete (704) und die Anker (706, 712), um die Magnete (704) am Zylinder (702) zu befestigen, **dadurch gekennzeichnet, dass** die Anker (706, 712) aus der Fläche des Zylinders (702) vorstehen und als Flusszerstreuer geformt sind und dass an zumindest einer Verbindung (716) von Ankern (706, 712) und der Fläche des Zylinders (702) Löcher (714, 722) zur Bildung einer magnetischen Drossel vorgesehen sind.

2. Verfahren nach Anspruch 1, bei dem der Zylinder aus einem Rohling gestanzt und aus diesem gestanzten Rohling gerollt wird.

3. Verfahren nach Anspruch 1 oder 2, bei dem die Feldanordnung (700) ein Rotor ist.

4. Verfahren nach Anspruch 1 oder 2, bei dem die Feldanordnung (700) ein Stator ist.

5. Verfahren nach Anspruch 4, bei dem der Zylinder (702) für jeden Magneten (704) einen nach innen vorstehenden Anschlaglappen (621) aufweist, um jeden Magneten (704) axial an der inneren Fläche des Zylinders (702) anzuordnen und die Magnete (704) um die innere Fläche des Zylinders zu platzieren, einschließlich ihrer Platzierung gegen ihre nach innen vorstehenden Anschlaglappen (621).

6. Verfahren nach Anspruch 4 oder 5, bei dem die Magnete (704) auf einer inneren Fläche des Zylinders (702) angeordnet sind und bei dem das Formen von Kunststoff (703) um die Anker (706, 712) und die Magnete (7049) das Formen von Kunststoff um die Magnete (704) umfasst, so dass kein Kunststoff (703) auf innere Flächen der Magnete .(704) geformt wird, um einen Luftspalt zwischen den inneren Flächen der Magnete (704) und einem Rotor eines Ankers des Motors zu verringern.

7. Verfahren nach einem der Ansprüche 4 bis 6, bei dem das Formen von Kunststoff (703) um die Magnete (704) und die Anker (706) das Zuführen von Kunststoff (703) im Wesentlichen zwischen den inneren und äußeren Radien der Magnete (704) umfasst.

8. Verfahren nach Anspruch 7, bei dem die Magnete (704) an einer inneren Fläche des Zylinders (702) angeordnet sind und bei dem die Magnete (704) innere Flächen mit Abflachungen an gegenüberliegenden Umfangsenden aufweisen und der Kunststoff (703) zwischen inneren und äußeren Radien der Magnete (704) zugeführt wird, einschließlich Zufuhr des Kunststoffs (703) über die Abflachungen der Magnete (704) im Wesentlichen zwischen den Abflachungen und dem inneren Radius der Magnete (704).

9. Verfahren nach einem der Ansprüche 4 bis 8, bei dem das Formen von Kunststoff (1006) um die Magnete (1004) und die Anker (1022) das Formen von mindestens einem Eingriffsmittel (1016) in mindestens einer Endwand (1018) eines durch Formen von Kunststoff hergestellten Kunststoffformteils (1006) umfasst.

10. Verfahren nach einem der vorhergehenden Ansprüche, bei dem jeder Magnet (704) zwischen benachbarten Ankern (706, 712) angeordnet wird, um die Magnete auf der Oberfläche des Zylinders (702) zu positionieren.

11. Verfahren nach einem der vorhergehenden Ansprüche, bei dem das Stanzen des Rohlings ein solches Stanzen des Rohlings umfasst, dass jeder Anker (706) mindestens eine Schlitzung in Längsrichtung aufweist, um das Rollen des Rohlings zur Bildung des Flussrings zu erleichtern.

12. Zylinder- und Magnetanordnung für eine Feldanordnung einer elektrischen Maschine mit
(a) einem eine Fläche mit Ankern (706, 712) aufweisenden Zylinder (702) und
(b) mehreren Magneten (704), die an der Fläche des Zylinders (702) durch ein um die Magnete (704) und die Anker (706, 712) geformtes Formteil aus Kunststoff (703) befestigt sind, **dadurch gekennzeichnet, dass** die Anker (706, 712) aus der Fläche des Zylinders (702) vorstehen und als Flusszerstreuer ausgebildet sind und dass an mindestens einer Verbindung (716) zwischen Anker (706, 712) und der Fläche des Zylinders Löcher vorgesehen sind, um eine magnetische Drossel (702) auszubilden.

13. Anordnung nach Anspruch 12, bei der jeder Magnet (704) zwischen benachbarten Ankern (706, 712) aufgenommen ist, die den Magneten (704) auf der Fläche des Zylinders (702) positionieren.

14. Anordnung nach Anspruch 12 oder 13, bei der die Feldanordnung (700) ein Stator ist und die Anker (706, 712) von der Innenfläche des Zylinders (702) radial nach innen vorstehen und eine Höhe größer als die Höhe der Magneten (704) haben, so dass ein Abstand zwischen radial inneren Enden benachbarter Anker (706, 712), zwischen denen ein Magnet aufgenommen ist, geringer ist als ein Abstand zwischen gegenüberliegenden Seitenkanten einer Innenfläche dieses Magneten (704), um den Magneten (704) gegen Bewegung radial nach innen zu halten.

15. Anordnung nach Anspruch 14, bei der Seitenwände der Magnete (704) sich parallel zu den Ankern (706, 712) radial nach innen erstrecken.

16. Anordnung nach einem der Ansprüche 12 bis 15 mit mindestens einem Paar von Nordpolen (N) und Südpolen (S), wobei jeder Pol mehrere Magnete (704) aufweist und die Anker (706, 712) als Flusszerstreuer ausgebildet sind.

17. Anordnung nach einem der Ansprüche 12 bis 16, bei der die Feldanordnung (700) ein Stator ist und jeder Anker (706, 712) erste und zweite einander gegenüberliegende Bereiche (720), die sich von der Innenfläche des Zylinders (702) nach innen erstrecken, und einen sich zwischen die ersten und zweiten einander gegenüberliegenden Bereiche erstreckenden dritten Bereich (707) aufweist, der sich von der Innenfläche des Zylinders (702) nach innen im Abstand befindet und sich über im Wesentlichen die gesamte Länge des benachbarten Magneten (704) quer über den Zylinder (702) erstreckt.

18. Anordnung nach einem der Ansprüche 12 bis 17, bei dem die Feldanordnung (700) ein Stator und der Zylinder ein Flussring ist.

19. Anordnung nach einem der Ansprüche 12 bis 17, bei dem die Feldanordnung (700) ein Stator und der Zylinder ein Statorgehäuse ist.

20. Anordnung nach einem der Ansprüche 12 bis 17, bei der die Feldanordnung (700) ein Rotor ist.

21. Anordnung nach einem der Ansprüche 12 bis 20, bei der mindestens ein Eingriffsmittel (1016) in mindestens einer Endwand (1018) des Kunststoffformteils (106) ausgebildet wird, wenn das Kunststoffformteil (106) um die Magneten (104) und Anker (122) geformt wird.

22. Anordnung nach einem der Ansprüche 12 bis 21 mit mindestens einem Paar von Nordpolen (N) und Südpolen (S), wobei jeder Pol mehrere Magnete (704) aufweist und das Kunststoffformteil eine Kunststoffumformung um die Magnete (704) jedes Nordpols (N) und jedes Südpols (S) hat und das aus Kunststoff geformte Kunststoffformteil (704) ferromagnetische Zusätze enthält, so dass das Kunststoffformteil (703) um jeden der Nord- und Südpole als Flusszerstreuer wirkt.

23. Motor mit
(a) einem Stator mit einer Feldanordnung gemäß einem der Ansprüche 12 bis 22,
(b) einem im Stator drehbaren Anker,
(c) einem mit dem Anker drehbaren und mit diesem über eine Welle verbundenen Kommutator und
(d) dem Kommutator zugeordneten Bürstenanordnungen.

24. Kraftgetriebenes Werkzeug mit
(a) einem Gehäuse,
(b) einem Motor gemäß Anspruch 23,
(c) einer Spannungsversorgung,
(d) einem mit der Motorwelle gekoppelten Ausgangselement und
(e) einem elektrisch zwischen Motor und Spannungsquelle angeordneten Betätigungselement zum Aktivieren und Deaktivieren des Motors, der im aktivierten Zustand das Ausgangselement dreht.

## Revendications

1. Procédé de fabrication d'un ensemble de cylindre et d'aimants pour un ensemble de champs d'une machine électrique, comprenant :
(a) le placement des aimants (704) autour d'une surface d'un cylindre (702) présentant des ancrages (706, 712); et
(b) le moulage du plastique (703) autour des aimants (704) et des ancrages (706, 712) pour sécuriser les aimants, **caractérisé en ce que** les ancrages (706, 712) font saillie depuis la surface du cylindre (702) et sont formés en tant qu'extenseurs de flux et **en ce que** des trous (714, 722) sont formés à au moins une jonction (716) entre les ancrages (706, 712) et la surface du cylindre (702) pour fournir un rétrécissement magnétique.

2. Procédé selon la revendication 1, dans lequel le cylindre est forgé à partir d'un flan et le cylindre est roulé à partir du flan forgé.

3. Procédé selon la revendication 1 ou 2, dans lequel l'ensemble de champs (700) est un rotor.

4. Procédé selon la revendication 1 ou 2, dans lequel l'ensemble de champs (700) est un stator.

5. Procédé selon la revendication 4, dans lequel le cylindre (702) comprend une plaquette de butée en saillie vers l'intérieur (621) pour chaque aimant (704) afin de situer chaque aimant (704) axialement sur la surface intérieure du cylindre (702) et le placement des aimants (704) autour de la surface intérieure du cylindre comprend leur placement contre leurs plaquettes de butée respectives (621).

6. Procédé selon la revendication 4 ou 5, dans lequel les aimants (704) sont disposés sur une surface intérieure du cylindre (702) et dans lequel le moulage du plastique (703) autour des ancrages (706, 712) et des aimants (704) comprend le moulage du plastique autour des aimants (704) de sorte que le plastique (703) ne soit pas moulé sur les surfaces intérieures des aimants (704) pour réduire un entrefer entre les surfaces intérieures des aimants (704) et un rotor d'une armature du moteur.

7. Procédé selon l'une quelconque des revendications 4 à 6, dans lequel le moulage du plastique (703) autour des aimants (704) et des ancrages (706) comprend le placement du plastique (703) sensiblement entre les rayons intérieur et extérieur des aimants (704).

8. Procédé selon la revendication 7, dans lequel les aimants (704) sont disposés sur une surface intérieure du cylindre (702) et dans lequel les aimants (704) comprennent des surfaces intérieures avec des fers plats au niveaux des extrémités périphériques opposées et l'échelonnement du plastique (703) entre les rayons intérieur et extérieur des aimants (704) comprend le placement du plastique (703) sur les fers plats des aimants (704) sensiblement entre les fers plats et le rayon intérieur des aimants (704).

9. Procédé selon l'une quelconque des revendications 4 à 8, dans lequel le moulage du plastique (1006) autour des aimants (1004) et des ancrages (1022) comprend la formation d'au moins une caractéristique expérimentale (1016) dans au moins une paroi d'extrémité (1018) d'un moulage plastique (1006) formé en moulant le plastique.

10. Procédé selon l'une quelconque des revendications précédentes, dans lequel chaque aimant (704) est placé entre les ancrages adjacents (706, 712) pour situer les aimants (704) sur la surface du cylindre (702).

11. Procédé selon l'une quelconque des revendications précédentes, dans lequel le forgeage du flan comprend le forgeage du flan de sorte que chaque ancrage (706) présente au moins une fente longitudinale pour faciliter le roulement du flan pour former la bague magnétique.

12. Ensemble de cylindre et d'aimants pour un ensemble de champs d'une machine électrique, comprenant :
(a) un cylindre (702) présentant une surface avec des ancrages (706, 712) ; et
(b) une. pluralité d'aimants (704) fixés sur la surface du cylindre (702) par un moulage du plastique (703) moulé autour des aimants (704) et des ancrages (706, 712), **caractérisé en ce que** les ancrages (706, 712) font saillie depuis la surface du cylindre (702) et sont formés en tant qu'extenseurs de flux et **en ce que** des trous sont formés à au moins une jonction (716) entre les ancrages (706, 712) et la surface du cylindre pour fournir un rétrécissement magnétique (702).

13. Ensemble selon la revendication 12, dans lequel chaque aimant (704) est reçu entre les ancrages adjacents (706, 712) qui situent l'aimant (704) sur la surface du cylindre (702).

14. Ensemble selon la revendication 12 ou 13, dans lequel l'ensemble de champs (700) est un stator et les ancrages (706, 712) font saillie radialement vers l'intérieur depuis la surface intérieure du cylindre (702) et présentent une hauteur supérieure à une hauteur des aimants (704) de sorte qu'une distance entre les extrémités radialement vers l'intérieur des ancrages adjacents (706, 712) entre lesquelles un aimant (704) est reçu soit inférieure à une distance entre les bords latéraux opposés d'une surface intérieure de cet aimant (704) pour retenir l'aimant (704) contre un mouvement vers l'intérieur radial.

15. Ensemble selon la revendication 14, dans lequel les parois latérales des aimants (704) s'étendent radialement vers l'intérieur parallèlement aux ancrages (706, 712).

16. Ensemble selon l'une quelconque des revendications 12 à 15, présentant au moins une paire de pôles nord (N) et sud (S) , chaque pôle présentant une pluralité d'aimants (704), les ancrages (706, 712) formés en tant qu'extenseurs de flux.

17. Ensemble selon l'une quelconque des revendications 12 à 16, dans lequel l'ensemble de champs (700) est un stator et chaque ancrage (706, 712) comprend des première et deuxième parties opposées (720) s'étendant vers l'intérieur depuis la surface intérieure du cylindre (702) et une troisième partie (707) s'étendant entre les première et deuxième parties opposées qui est espacée vers l'intérieur depuis la surface intérieure du cylindre (702), la troisième partie (707) s'étendant transversalement à travers le cylindre (702) sur sensiblement une longueur entière de l'aimant (704) auquel elle est adjacente.

18. Ensemble selon l'une quelconque des revendications 12 à 17, dans lequel l'ensemble de champs (700) est un stator et le cylindre est une bague magnétique.

19. Ensemble selon l'une quelconque des revendications 12 à 17, dans lequel l'ensemble de champs (700) est un stator et le cylindre est un logement de stator.

20. Ensemble selon l'une quelconque des revendications 12 à 17, dans lequel l'ensemble de champs (700) est un rotor.

21. Ensemble selon l'une quelconque des revendications 12 à 20, dans lequel au moins une caractéristique expérimentale (1016) est formée dans au moins une paroi d'extrémité (1018) du moulage plastique (1006) lorsque le moulage plastique (1006) est moulé autour des aimants (1004) et des ancrages (1022).

22. Ensemble selon l'une quelconque des revendications 12 à 21 présentant au moins une paire de pôles nord (N) et sud (S) avec chaque pôle présentant une pluralité d'aimants (704) et le moulage plastique comprenant un moulage plastique autour des aimants (704) de chaque pôle nord (N) et sud (S), le moulage plastique (703) moulé de plastique présentant des additifs ferromagnétiques de sorte que le moulage plastique (703) autour de chacun des pôles nord et sud agisse en tant qu'extenseur de flux.

23. Moteur comprenant :
(a) un stator comprenant un ensemble de champs selon l'une quelconque des revendications 12 à 22 ;
(b) une armature rotative à l'intérieur du stator ;
(c) un commutateur rotatif avec l'armature et relié à l'armature par l'intermédiaire d'un arbre ; et
(d) des ensembles de balais associés au commutateur.

24. Machine à usiner comprenant :
(a) un logement ;
(b) un moteur selon la revendication 23 ;
(c) une source d'alimentation ;
(d) un élément de sortie couplé à l'arbre de moteur ; et
(e) un élément d'actionnement couplé électriquement entre le moteur et la source d'alimentation pour mettre sous tension et mettre hors tension le moteur, le moteur tournant en rotation l'élément de sortie lorsqu'il est alimenté.
